Europäisches Patentamt

European Patent Office

Office européen des brevets

(19)

(11) Veröffentlichungsnummer : **0 049 406**
**B1**

(12) **EUROPÄISCHE PATENTSCHRIFT**

(45) Veröffentlichungstag der Patentschrift :
15.08.84

(51) Int. Cl.³ : **F 16 K 11/07, F 15 B 13/02**

(21) Anmeldenummer : 81107415.2

(22) Anmeldetag : 18.09.81

(54) **Anordnung und Ausbildung von Durchlässen für Druckmittel in Zylindern.**

(30) Priorität : 04.10.80 DE 3037674

(43) Veröffentlichungstag der Anmeldung :
14.04.82 Patentblatt 82/15

(45) Bekanntmachung des Hinweises auf die Patenterteilung : 15.08.84 Patentblatt 84/33

(84) Benannte Vertragsstaaten :
AT CH DE FR GB IT LI NL

(56) Entgegenhaltungen :
DE-A- 2 814 932
FR-A- 2 002 339
US-A- 2 920 650
US-A- 3 318 571
US-A- 3 532 122

(73) Patentinhaber : WABCO Westinghouse Steuerungstechnik GmbH & Co.
Bartweg 13 Postfach 91 12 70
D-3000 Hannover 91 (DE)

(72) Erfinder : Rodewald, Gerhard
Hirtenstrasse 3A
D-3003 Ronnenberg 3 (DE)
Erfinder : Opel, Detlef
Teichweg 18
D-3051 Haste (DE)
Erfinder : Brausfeld, Walter
Hann.Strasse 101
D-3000 Hannover 61 (DE)
Erfinder : Göttling, Helmut
Fuhrenkamp 3
D-3004 Isernhagen 4 (DE)
Erfinder : Meyer, Hans Friedrich
Brauereiweg 6
D-3007 Gehrden (DE)
Erfinder : Möller, Rudolf
Knulweg 15c
D-3007 Gehrden 1 (DE)

(74) Vertreter : Schrödter, Manfred
WABCO Westinghouse Fahrzeugbremsen GmbH Am
Lindener Hafen 21 Postfach 91 12 80
D-3000 Hannover 91 (DE)

**Beschreibung**

Die Erfindung betrifft die Anordnung und Ausbildung von Durchlässen für Druckmittel in Zylindern, insbesondere in Wegeventilen, gemäß dem Oberbegriff des Anspruches 1.

Beim Überfahren von in einem Zylinder, z. B. in einem Wegeventil angeordneten Durchlässen mittels eines mit einem elastischen Dichtring versehenen druckmittelbeaufschlagten Kolbens tritt das Problem auf, daß der Dichtring aus seinem Einbauraum heraus und in die Durchlässe gedrückt wird.

Die Folgen sind schneller Verschleiß des Dichtringes, Undichtigkeiten zwischen Kolben und Zylinderwand und möglicherweise Zerstörung des Dichtringes. Um dies zu vermeiden, ist es bekannt (US-Patentschrift 3 318 571), bei einer Anordnung der eingangs genannten Art die Durchlässe dadurch zu bilden, daß zwischen den einander zugewandten Stirnseiten zweier zylindrischer Hohlkörper ein oder zwei Ringe angeordnet werden, welche trapezförmige Ausnehmungen aufweisen. Diese Ausnehmungen bilden mit den Stirnseiten der Hohlkörper die Durchlässe, welche in Umfangsrichtung verlaufen und abgeschrägte Enden aufweisen.

Bei einer derartigen Ausbildung der Durchlässe wird ein Eintauchen des Dichtringes in die Durchlässe weitgehend verhindert. Es können jedoch Beschädigungen an den Dichtringen auftreten, da die Dichtringe senkrecht auf die parallel und in Umfangsrichtung verlaufenden Seitenkanten der Durchlässe auftreffen.

Beabsichtigt man, die durch die US-Patentschrift 3 318 471 vorbekannte Anordnung auch bei Ventilen anzuwenden, die Durchlässe mit vergleichsweise großen Querschnitten aufweisen müssen, so kann dies z. B. wie folgt realisiert werden.

Man kann den Abstand zwischen den parallel zueinander verlauffenden Kanten vergrößern und die Länge der Kanten beibehalten oder die Kantenlänge verändern und den Abstand zwischen diesen Kanten beibehalten.

Die zuerst genannte Maßnahme vergrößert die Gefahr des Eintauchens des Dichtringes in die Durchlässe. Die an zweiter Stelle genannte Maßnahme verhindert zwar ein Eintauchen des Dichtringes in die Durchlässe, hat aber zur Folge, daß der Dichtring mit noch größeren Teilstücken seine Anlagefläche senkrecht auf die parallel zueinander und in Umfangsrichtung verlaufenden Kanten der Durchlässe auftrifft.

Aus der DE-A-28 14 932 ist eine Steuerventileinrichtung bekannt, bei welcher die zum Durchtritt des Mediums vorgesehenen Durchlässe in der Wandung eines als Ventilschieber ausgebildeten zylindrischen Körpers schräg zur Längsachse des zylindrischen Körpers verlaufen. Diese Anordnung ist auch dann anwendbar, wenn Durchlässe mit vergleichsweise großem Querschnitt erforderlich sind.

Bei einer derartigen Anordnung und Ausbildung der Durchlässe wird zwar ein senkrechtes Auftreffen des Dichtringes auf die die Durchlässe begrenzenden Kanten verhindert, jedoch tritt hier das Problem auf, daß die Kanten sehr genau entgratet und abgerundet werden müssen, was einen erheblichen Arbeitsaufwand erfordert. Auch bei großer Sorgfalt bei der Durchführung dieser Arbeiten ist es nicht auszuschließen, daß vereinzelt Grate stehenbleiben, welche Beschädigungen am Dichtring verursachen können. Dieses Problem der Grate tritt bei der zuerst genannten US-Patentschrift 3 318 571 nicht auf, weil sich die zwischen den Stirnseiten der beiden zylindrischen Hohlkörper anzuordnenden Ringe spanlos herstellen lassen.

Der Erfindung liegt die Aufgabe zugrunde, bei einer Anordnung der eingangs genannten Art, die Durchlässe für das Druckmittel derart auszubilden, daß ein Eintauchen des Dichtringes in die Durchlässe ohne zusätzliche Schutzmaßnahmen und auf einfache Weise auch bei relativ großen Durchlaßquerschnitten verhindert wird.

Diese Aufgabe wird mit den im kennzeichnenden Teil des Anspruches 1 angegebenen Mitteln gelöst.

Vorteilhafte Ausgestaltungen und Weiterbildungen der Erfindung sind in den Unteransprüchen aufgezeigt.

Von besonderem Vorteil sind die einfache Herstellbarkeit der erfindungsgemäßen Ausbildung der Durchlässe und die den Dichtring schonende Eigenschaft. Der Durchlaßquerschnitt läßt sich durch Verlängern der von den ineinandergreifenden Erhöhungen und Vertiefungen gebildeten Schlitze vergrößern, ohne die Breite der Schlitze zu verändern und ohne eine Kante zu schaffen, auf welche das Dichtelement auftreffen kann. Ein Eintauchen des Dichtringes wird auf diese vorteilhafte Art und Weise im Gegensatz zu der eingangs erwähnten US-Patentschrift 3 318 571 auch bei verhältnismäßig großen Durchlaßquerschnitten verhindert.

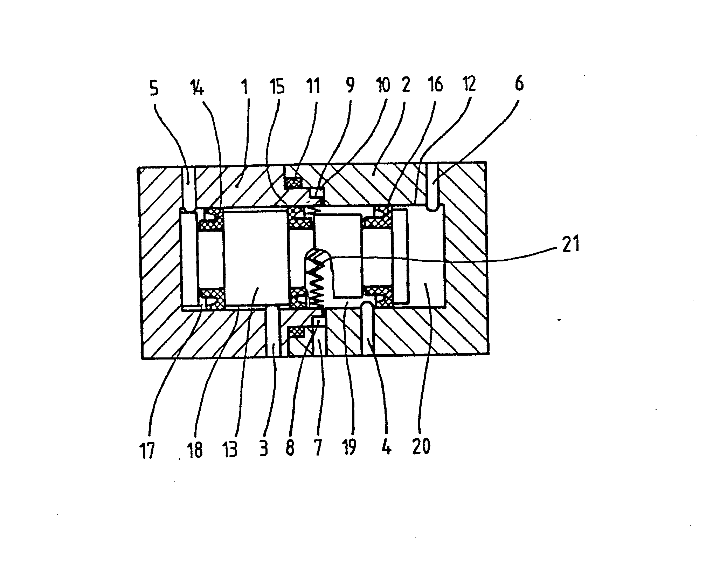

Ein Ausführungsbeispiel der Erfindung wird nachstehend anhand der Abbildung näher erläutert.

Die Abbildung zeigt im Schnitt dargestellt ein Wegeventil, dessen Gehäuse zweiteilig ausgebildet ist, wobei die aneinanderstoßenden Stirnseiten des Gehäuses im Bereich der Zylinderbohrung gezackt ausgebildet sind und in der Gehäusewandung ein umlaufender Kanal vorgesehen ist, der über den gezackten Bereich der Stirnseiten des Gehäuses mit der Zylinderbohrung verbunden ist.

In den Wandung eines aus zwei Gehäuseteilen 1 und 2 bestehenden Ventilgehäuses sind vier als Druckmitteldurchlässe 3, 4, 5, 6 dienende Durchgangsbohrungen vorgesehen. Eine weitere, als Druckmitteldurchlaß 7 dienende Bohrung mündet in einem in Umfangsrichtung des Ventilgehäuses 1, 2 verlaufenden Ringkanal 8, der aus einer in die Stirnseite des Gehäuseteiles 1 eingearbeiteten Stufe 9 und einer in die Stirnseite des Gehäuseteils 2 eingearbeiteten Stufe 10 gebildet wird. Zwei weitere in die Stirnseiten der beiden Gehäuseteile 1 und 2 eingearbeitete Stufen bilden eine Nut zur Aufnahme eines Dichtelementes 11, welches die Nahtstelle zwischen den beiden Gehäuseteilen 1 und 2 druckdicht verschließt.

Die Gehäuseteile 1 und 2 schließen eine Gehäusebohrung 12 ein, die zur Aufnahme eines beidseitig mit Druckmittel beaufschlagbaren Ventilschiebers 13 dient.

Der Ventilschieber 13 weist drei Nute auf, in welchen Dichtkörper 14, 15 und 16 gelagert sind. Mittels der Dichtkörper 14, 15, 16 wird die Gehäusebohrung 12 in vier Kammern 17, 18, 19 und 20 unterteilt, wobei die Kammern 18 und 19 als Ringkammer ausgebildet sind, welche die Funktion von Überströmkanälen haben. Die Kammern 17 und 20 dienen als Steuerkammern und stehen über die Druckmitteldurchlässe 5 und 6 mit hier nicht gezeigten Steuerventilen in Verbindung. Von der Kammer 18 führt der Druckmitteldurchlaß 3 zur Atmosphäre. Der mit einer nicht dargestellten Druckmittelquelle verbundene Druckmitteldurchlaß 4 führt zur Kammer 19. Mit dem Druckmitteldurchlaß 7 ist ein nicht gezeigter Verbraucher verbunden.

Wie im vorstehenden bereits gesagt, steht der Druckmitteldurchlaß 7 mit einem Kanal 8 in Verbindung, der aus den Stufen 9 und 10 der einander zugewandten Stirnseiten der beiden Gehäuseteile 1 und 2 gebildet wird.

Die von der Wand der Gehäusebohrung 12 begrenzte Seite des Kanals 8 ist über ihren gesamten Umfang zackenförmig durchbrochen. Der Zackenförmige Durchlaß 21 wird dadurch gebildet, daß der Bereich der sich gegenüberstehenden Stirnseiten der beiden Gehäuseteile 1 und 2, welcher zum einen die Gehäusebohrung 12 und zum anderen den Kanal 8 begrenzt, zackenförmig ausgebildet ist und die Zacken ineinandergreifen.

Die Größe des Spalts zwischen den Zacken ist einstellbar mittels verschieden großer Distanzstücke zwischen den Stirnseiten der beiden Gehäuseteile 1 und 2.

Anstatt der Zackenform können die Stirnseiten in dem beschriebenen Bereich auch Wellenform oder irgendeine andere Form aufweisen. Es ist selbstverständlich auch möglich, anstelle eines geteilten Ventilgehäuses ein einteiliges Ventilgehäuse zu verwenden, in welches eine geteilte Hülse eingesetzt wird.

Weiters ist es möglich, den Durchlaß 21 in der Wandung eines hohlen Kolbens anzuordnen, der aus zwei Kolbenteilen zusammengesetzt ist.

Die Funktion des im vorstehenden beschriebenen Ventils wird nachfolgend kurz erläutert.

In der Abbildung ist die mit dem Druckmitteldurchlaß 6 verbundene Kammer 20 mit Druckmittel beaufschlagt und der Ventilschieber 13 befindet sich in seiner linken Endlage. Die Druckmitteldurchlässe 4 und 7 sind über die als Überströmkanal dienende Kammer 19 miteinander verbunden. Von der nicht gezeigten Druckmittelquelle strömt Druckmittel durch den Druckmitteldurchlaß 4 in die Kammer 19. Von dort gelangt das Druckmittel durch den zackenförmigen Durchlaß 21 in den Kanal 8 und weiter über den Druckmitteldurchlaß 7 zu einem nicht dargestellten Verbraucher.

Soll nun der Verbraucher entlüftet werden, so wird die Druckmittelzufurh vom Druckmitteldurchlaß 6 auf den Druckmitteldurchlaß 5 umgeschaltet. Die als Steuerkammer dienende Kammer 17 wird nun mit Druckmittel beaufschlagt und der Ventilschieber 13 nach rechts verschoben. Der Dichtkörper 15 überfährt bei diesem Verschiebevorgang den gezackten Durchlaß 21 des Gehäuses 1, 2. Hat der Ventilschieber 13 seine rechte Endlage erreicht, so ist der zur Atmosphäre führende Druckmitteldurchlaß 3 mit dem zum Verbraucher führenden Druckmitteldurchlaß 7 über die als Überströmkanal dienende Kammer 18 sowie den gezackten Durchlaß 21 und den Kanal 8 verbunden.

## Ansprüche

1. Anordnung und Ausbildung von Durchlässen (21) für Druckmittel in Zylindern, insbesondere Wegeventilen, mit folgenden Merkmalen :

a) es ist wenigstens ein Dichtkörper (15) vorgesehen, welcher in einem bzw. auf einem (13) von zwei abgedichteten relativ zueinander verschiebbaren Teilen (1, 2 : 13) angeordnet ist und über die im anderen (1, 2) der beiden Teile angeordneten Durchlässe (21) bewegbar ist ;

b) die Durchlässe (21) verlaufern ringförmig auf wenigstens einem Teil des Umfangs des die Durchlässe aufweisenden Teiles (1, 2) ;

c) die Durchlässe (21) werden von den einander zugewandten Stirnseiten zweier Hälften (1, 2) eines zylindrischen Hohlkörpers gebildet ; gekennzeichnet durch die folgenden Merkmale :

d) die als Schlitze ausgebildeten Durchlässe (21) verlaufen in an sich bekannter Weise wenigstens auf dem überwiegenden Teil ihrer Länge schräg zur Umfangsrichtung ;

e) die Durchlässe (21) werden von Erhöhungen und Vertiefungen gebildet, welche in den einander zugewandten Stirnseiten der Hälften (1, 2) des zylindrischen Hohlkörpers angeordnet sind ;

f) die Erhöhungen und Vertiefungen stehen nach Art einer Stirnverzahnung miteinander in Eingriff.

2. Anordnung und Ausbildung nach Anspruch 1, dadurch gekennzeichnet, daß die Durchlässe (21) einen zackenförmigen Verlauf aufweisen.

3. Anordnung und Ausbildung nach Anspruch 1, dadurch gekennzeichnet, daß die Durchlässe (21) einen wellenförmigen Verlauf aufweisen.

4. Anordnung und Ausbildung nach wenigstens einem der vorhergehenden Ansprüche, dadurch gekennzeichnet, daß die Durchlässe (21) in einer zusätzlichen, aus zwei Teilen zusammengesetzten, im Zylindergehäuse angeordneten Hülse vorgesehen sind.

5. Anordnung und Ausbildung nach Anspruch 1, dadurch gekennzeichnet, daß die Durchlässe (21) in der Wandung eines hohlen Kolbens angeordnet sind, der aus zwei Kolbenteilen zusammengesetzt ist.

6. Anordnung und Ausbildung nach wenigstens einem der vorhergehenden Ansprüche, gekennzeichnet durch die folgenden Merkmale :

a) in den einander zugewandten Stirnseiten der beiden Hälften des zylindrischen Körpers sind Stufen (9, 10) vorgesehen, welche einen Ringkanal (8) begrenzen ;

b) die Wandung des Ringkanals (8), welche dem Dichtkörper (15) zugewandt ist, weist die Durchlässe (21) auf, welche von den ineinandergreifenden Erhöhungen und Vertiefungen gebildet werden.

**Claims**

1. Arrangement and formation of ports (21) for pressure media in cylinders, especially in directional control valves, having the following features :

a) at least one sealing member (15) is provided which is arranged in or on one (13) of two sealed parts (1, 2 ; 13) movable relative to one another, and which is movable over the ports (21) arranged in the other (1, 2) of the two parts ;

b) the ports (21) extend in an annular manner along at least part of the circumference of the part (1, 2) having the ports ;

c) the ports (21) are formed by the opposing end faces of two halves (1, 2) of a cylindrical hollow body ;
characterised by the following features :

d) in a manner known per se the ports (21), which are in the form of slots, extend obliquely with respect to the direction of the circumference, at least over the majority of their length ;

e) the ports (21) are formed by raised portions and indentations which are located in the opposing end faces of the halves (1, 2) of the cylindrical hollow body ;

f) the raised portions and indentations engage one another in the manner of a face toothing.

2. Arrangement and formation according to claim 1, characterised in that the ports (21) are jagged.

3. Arrangement and formation according to claim 1, characterised in that the ports (21) are wave-shaped.

4. Arrangement and formation according to at least one of the preceding claims, characterised in that the ports (21) are provided in an additional sleeve comprising two parts and located in the cylinder housing.

5. Arrangement and formation according to claim 1, characterised in that the ports (21) are arranged in the wall of a hollow piston comprising two piston members.

6. Arrangement and formation according to at least one of the preceding claims, characterised by the following features :

a) in the opposing end faces of the two halves of the cylindrical body steps (9, 10) are provided which delimit an annular channel (8) ;

b) the wall of the annular channel (8) which faces the sealing member (15) has the ports (21) which are formed by the raised portions and indentations that engage one another.

**Revendications**

1. Disposition et configuration de passages (21) pour un fluide sous pression dans des cylindres, en particulier des distributeurs, présentant les particularités suivantes :

a) il est prévu au moins un corps d'étanchéité (15) qui est disposé dans une ou sur une (13) de deux pièces (1, 2 ; 13) montées à joint étanche et pouvant coulisser l'une par rapport à l'autre, et qui peut circuler sur les passages (21) prévus dans l'autre (1, 2) des deux pièces ;

b) les passages (21) s'étendent avec une forme circulaire sur au moins une partie de la périphérie de la pièce (1, 2) qui présente les passages ;

c) les passages (21) sont formés par les faces radiales dirigées l'une vers l'autre de deux moitiés (1, 2) d'un corps creux cylindrique ;
caractérisées par les particularités suivantes :

d) les passages (21) réalisés sous la forme de fentes s'étendent, d'une façon connue en soi, obliquement par rapport à la direction circonférentielle, au moins sur la partie prédominante de leur longueur ;

e) les passages (21) sont formés par des protubérances et des évidements qui sont prévus dans les faces radiales dirigées l'une vers l'autre des moitiés (1, 2) du corps creux cylindrique ;

f) les protubérances et évidements s'interpénètrent à la façon d'une denture frontale.

2. Disposition et configuration selon la revendication 1, caractérisées en ce que les passages (21) présentent une allure dentelée.

3. Disposition et configuration selon la revendication 1, caractérisées en ce que les passages (21) présentent une allure ondulée.

4. Disposition et configuration selon au moins l'une des revendications précédentes, caractérisées en ce que les passages (21) sont prévus dans une fourrure additionnelle, disposée dans le corps du cylindre et composée de deux parties.

5. Disposition et configuration selon la revendication 1, caractérisées en ce que les passages (21) sont disposés dans la paroi d'un piston creux qui est composé de deux parties de piston.

6. Disposition et configuration selon au moins l'une des revendications précédentes, caractérisées par les particularités suivantes :

a) dans les faces radiales des deux moitiés du corps cylindrique qui se font face sont prévus des épaulements (9, 10) qui délimitent un canal annulaire ;

b) la paroi du canal annulaire (8) qui est dirigée vers le corps d'étanchéité (15) présente les passages (21) qui sont formés par les protubérances et évidements qui s'interpénètrent.